(19) Europäisches Patentamt

European Patent Office

Office européen des brevets

(11) **EP 4 321 251 B1**

(12) **EUROPEAN PATENT SPECIFICATION**

(45) Date of publication and mention
of the grant of the patent:
**01.10.2025 Bulletin 2025/40**

(21) Application number: **23191371.6**

(22) Date of filing: **14.08.2023**

(51) International Patent Classification (IPC):
***B01L 9/00*** *(2006.01)*      ***G01N 35/10*** *(2006.01)*

(52) Cooperative Patent Classification (CPC):
**G01N 35/1011; G01N 35/1079**

(54) **NOZZLE STRUCTURE**

DÜSENSTRUKTUR

STRUCTURE DE BUSE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.08.2022 JP 2022129092**

(43) Date of publication of application:
**14.02.2024 Bulletin 2024/07**

(73) Proprietor: **ARKRAY, Inc.**
**Kyoto-shi, Kyoto 601-8045 (JP)**

(72) Inventor: **MINAMI, Soichiro**
**Kyoto 602-0008 (JP)**

(74) Representative: **Dehns**
**10 Old Bailey**
**London EC4M 7NG (GB)**

(56) References cited:
**EP-A1- 3 418 752**      **JP-A- 2009 036 595**
**US-A1- 2007 095 159**      **US-A1- 2012 321 520**

**Description**

BACKGROUND

Field of the Invention

The present invention relates to a nozzle structure according to claim 1, particularly a nozzle structure in a specimen analysis device for analyzing a biological specimen.

Description of the Related Art

Japanese Patent Application Laid-Open (JP-A) No. H9-15113 (Patent Literature) discloses a structure of a specimen analysis device in which a pair of upper and lower protruding pieces are protruded laterally from a nozzle holder, and an upper end portion of a sampling nozzle is fixed to an upper protruding piece.
EP 3418752 A1 discloses a system to maintain the vertical alignment of a needle. In operation, a piercer stopper contacts a retaining plate which forces the needle into a vertical orientation. US 2007/095159 A1 discloses a double needle comprising a pre-piercing needle and a sampling needle which are both fixed to a rocker arm, wherein the pre-piercing needle can protect the sampling needle from damage.
US 2012/321520 A1 discloses a nozzle apparatus for maintaining a vertical, or close to vertical, orientation of the nozzle tube in order to reduce the friction between a pipe fixing member and rails on which the pipe fixing member is free to move.

SUMMARY OF THE INVENTION

Conventionally, a sampling nozzle that sucks a specimen from a specimen container such as a blood collection tube moves a needle-shaped sampling nozzle up and down in a vertical direction, and punctures a rubber stopper for sealing in a sealed specimen container to suck the specimen, as in the above-described Patent Literature. Therefore, the sampling nozzle receives a reaction force at the time of puncturing the rubber stopper, and may be detached from the nozzle holder. Therefore, stability is required. The sampling nozzle is formed in an elongated hollow needle shape, and a high position/posture accuracy is required for the sampling nozzle in order to correctly puncture a lid of a container including the rubber stopper from above.
In order to secure stability and accuracy, a mechanism is adopted in which a nozzle is firmly fixed to a nozzle holder with a screw or the like and can be integrally moved as in Patent Literature. As a result, a nozzle mechanism can stably and accurately operate on the lid of the container.
In this regard, when the nozzle is removed from the holder due to cleaning, component replacement, or the like and attached to the device again, it is essential to carefully perform the attachment operation in order to maintain an attachment accuracy. When the sampling nozzle is completely fixed by screwing as in the above-described conventional example, a tool is required at the time of attaching and detaching the nozzle or replacing a member such as an O-ring through which the nozzle is inserted, and it is difficult to simply attach and detach the sampling nozzle.
According to claim 1, a nozzle can be easily attached to a specimen analysis device, and a posture of the nozzle during operation is accurately adjusted and stabilized in a vertical direction. Here, the term "posture" refers to the positioning of the nozzle with respect to the vertical, i.e. whether the nozzle is vertically aligned, or inclined with respect to the vertical.
A nozzle structure according to claim 1 includes: a nozzle that includes a pressed portion; and a holder that includes an adjustment portion and that supports the nozzle, in which the pressed portion is formed in an annular shape having an axis that is identical to an axis of the nozzle, the adjustment portion faces the pressed portion with a space therebetween obliquely above the pressed portion, in a state in which the nozzle is supported by the holder, and returns the nozzle to a central axis of the adjustment portion by a reaction force when the pressed portion abuts (i.e. is pressed against) the adjustment portion, wherein a relationship of $2(L - R) \tan\psi > (D - 2R)$ is satisfied, wherein: L is a height from a fulcrum provided below the holder and supporting the nozzle separately from the holder, to an upper end of the pressed portion , D is a diameter of a radial outer end of the pressed portion in the nozzle, R is a radius of curvature of a cross-sectional shape of the pressed portion, and $\psi$ is an angle formed by a horizontal direction and the adjustment portion.
According to claim 1 the nozzle can be easily attached to the specimen analysis device, and the posture (inclination) of the nozzle during operation can be accurately adjusted and stabilized in the vertical direction.

BRIEF DESCRIPTION OF THE DRAWINGS

Certain exemplary embodiments will now be described in greater detail by way of example only and with reference to the accompanying drawings in which:

Fig. 1 is a perspective view illustrating a nozzle structure according to a first embodiment;

Fig. 2 is a perspective view illustrating a state in which a nozzle is removed from a holder;

Fig. 3 is a cross-sectional view illustrating a tip of a nozzle and a specimen container;

Fig. 4 is a cross-sectional view illustrating a main part of the nozzle structure according to the first embodiment;

Fig. 5 is a perspective view illustrating an adjustment portion of the holder;

Fig. 6 is a perspective view illustrating the adjustment portion of the holder;

Fig. 7 is a view geometrically schematically illustrating a pressed portion and an adjustment portion;

Fig. 8 is an enlarged view illustrating a state in which a portion of a point A of the pressed portion in Fig. 7 abuts the adjustment portion;

Fig. 9 is an enlarged view illustrating a state in which a portion of a point B of the pressed portion in Fig. 7 abuts the adjustment portion;

Fig. 10 is a perspective view illustrating a nozzle structure according to a second embodiment;

Fig. 11 is a perspective view illustrating a state in which an insertion element is pulled out from a holder according to the second embodiment and a nozzle is removed from the insertion element;

Fig. 12 is a cross-sectional view illustrating a state in which a nozzle main body according to the second embodiment receives a resistance reaction force from a specimen container, and a pressed portion and an adjustment portion abut on each other;

Fig. 13 is a cross-sectional view illustrating a main part of a nozzle structure according to the second embodiment;

Fig. 14 is a cross-sectional view illustrating a main part of a nozzle structure according to a third embodiment;

Fig. 15 is a cross-sectional view illustrating a main part of a nozzle structure according to a fourth embodiment; and

Fig. 16 is a cross-sectional view illustrating a main part of a nozzle structure according to a fifth embodiment.

## DETAILED DESCRIPTION OF THE INVENTION

Hereinafter, modes for carrying out the invention will be described with reference to the drawings. In the drawings, components denoted by the same reference numerals mean the same or similar components. Overlapping descriptions and reference numerals in the embodiments described below may be omitted. The drawings used in the following description are all schematic, and dimensional relationships of respective elements, ratios of respective elements, and the like illustrated in the drawings do not necessarily coincide with actual ones. Dimensional relationships of the respective elements, ratios of the respective elements, and the like do not necessarily coincide among the plurality of drawings.

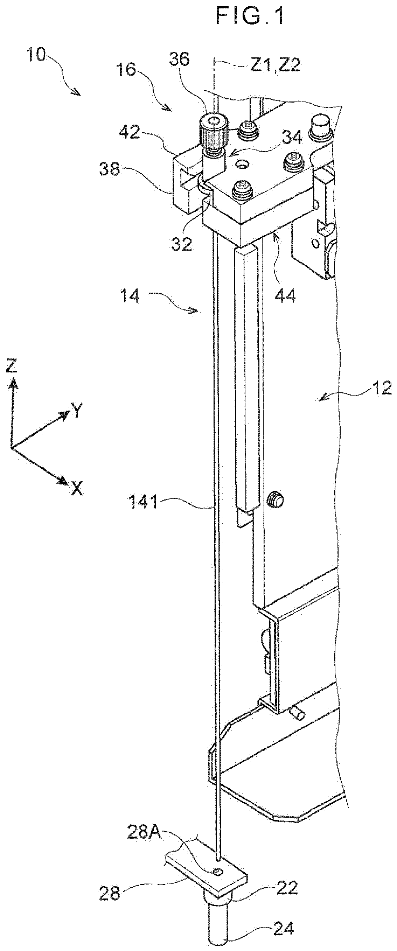

An arrow Z illustrated in each drawing is a vertical direction and indicates an upward direction of the specimen analysis device. In a horizontal direction orthogonal to a Z direction, a width direction is defined as an X direction, and a direction (depth direction) orthogonal to the Z direction and the X direction is defined as a Y direction. A central axis Z1 illustrated in Fig. 1 is in the vertical direction and is parallel to the Z direction of a coordinate system. In a plane orthogonal to the central axis Z1, a direction passing through the central axis Z1 is referred to as a radial direction. In the radial direction, a direction toward the central axis Z1 is referred to as an inner side, and a direction away from the central axis Z1 is referred to as an outer side.

[First Embodiment]

(Configuration)

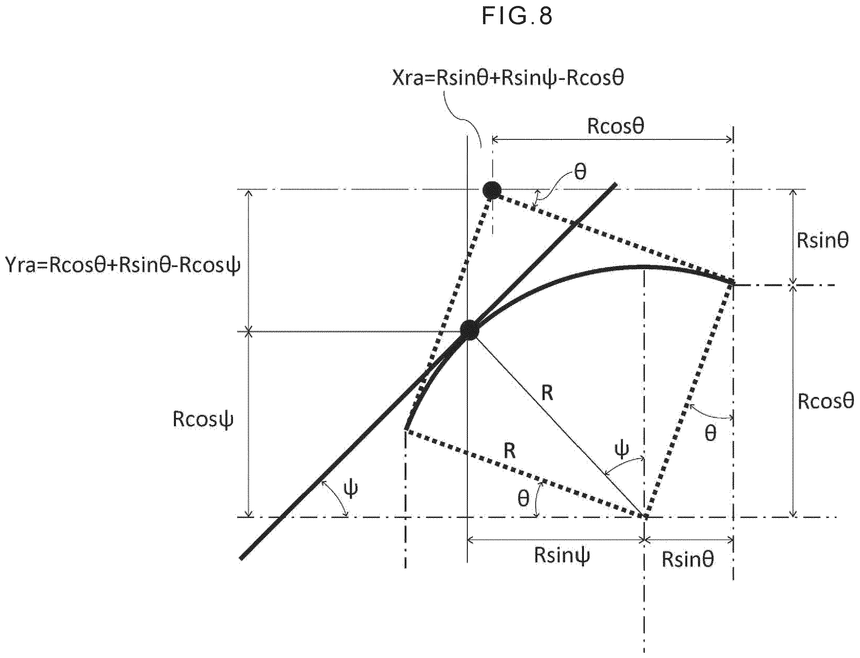

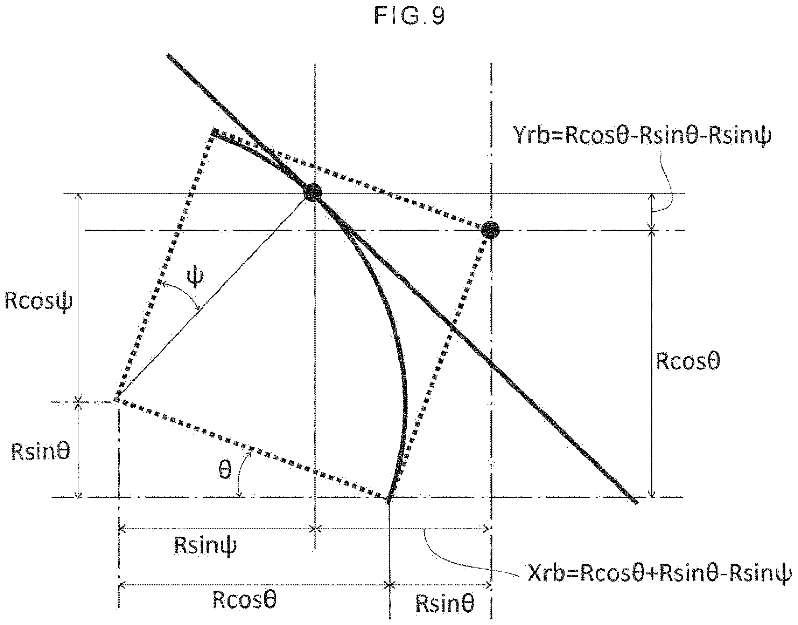

In Figs. 1 to 9, a nozzle structure 10 according to the present embodiment is, for example, a specimen transfer structure for sucking or discharging a biological specimen of a liquid such as blood or urine. The nozzle structure 10 is used for, for example, a specimen analysis device such as a liquid chromatography device that automatically measures a concentration of hemoglobin (HbA1c) in a specimen such as whole blood. The nozzle structure 10 is supported by a nozzle support mechanism 12 and moves together with the nozzle support mechanism 12 so as to transfer the specimen between the specimen container and the analysis device. The nozzle structure 10 can move up and down with respect to the nozzle support mechanism 12. The nozzle support mechanism 12 can move between the specimen and the analysis device by a transfer unit such as a belt or a rail. The nozzle structure 10 may be provided separately from the analysis device as a mechanism for transferring the specimen, or may be disposed as one functional unit in the analysis device. In the present embodiment, the nozzle structure 10 is provided in the analysis device via the nozzle support mechanism 12. The nozzle structure 10 includes a nozzle 14 and a holder 16.

(Nozzle 14)

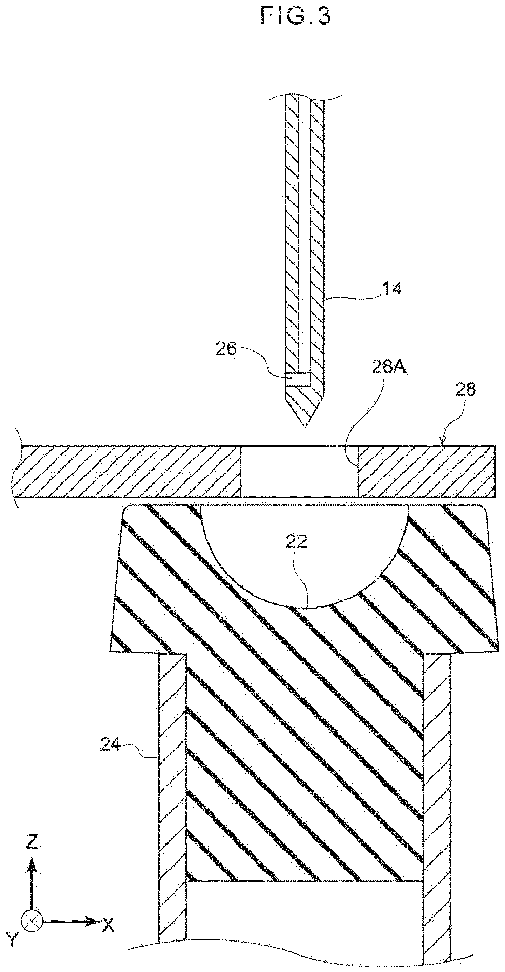

As illustrated in Figs. 1 and 3, the nozzle 14 is an elongated needle-shaped member having a hollow inside and a sharp tip, and has a structure capable of sucking a specimen (not illustrated) accommodated in a specimen container 24 by puncturing a lid 22 that seals the specimen container 24. Examples of the specimen container 24 include a blood collection tube. The nozzle 14 has a nozzle main body 141 and a joint portion 34.

The inside of the nozzle main body 141 is a nozzle through-passage extending along the central axis Z1 of the nozzle 14 over the entire length and communicating from a tip of the nozzle main body 141 to the joint portion 34. That is, the nozzle through-passage is a flow path of a specimen to be transferred. As illustrated in Fig. 3, a nozzle hole 26 communicating with the nozzle through-passage inside the nozzle main body 141 is formed at the tip of the nozzle main body 141.

In the following description, a direction in which the tip of the nozzle main body 141 is directed in which the nozzle hole 26 is formed may be referred to as a lower side, and a side opposite to the direction in which the tip is directed may be referred to as an upper side.

The analysis device sucks or discharges the specimen through the nozzle hole 26 in a state in which the tip of the nozzle main body 141 punctures the lid 22 of the specimen container 24 and the tip is inserted into the specimen container 24.

As illustrated in Fig. 1, for example, a holding plate 28 is disposed on the upper side of the installation position of the specimen container 24 in a specimen suction device. A through-hole 28A through which the nozzle 14 passes is formed in the holding plate 28. As will be described later, the holding plate 28 is a member for preventing the entire specimen container 24 from rising due to a frictional force when the nozzle 14 puncturing the lid 22 is pulled out from the lid 22.

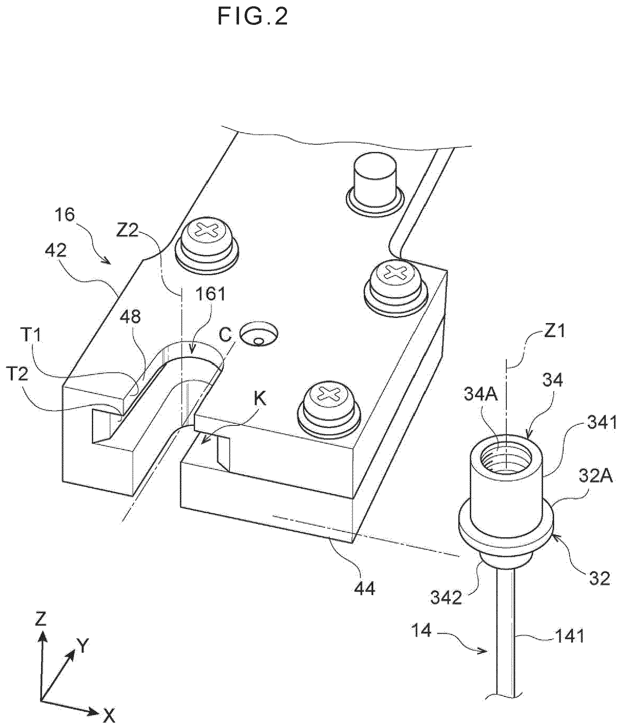

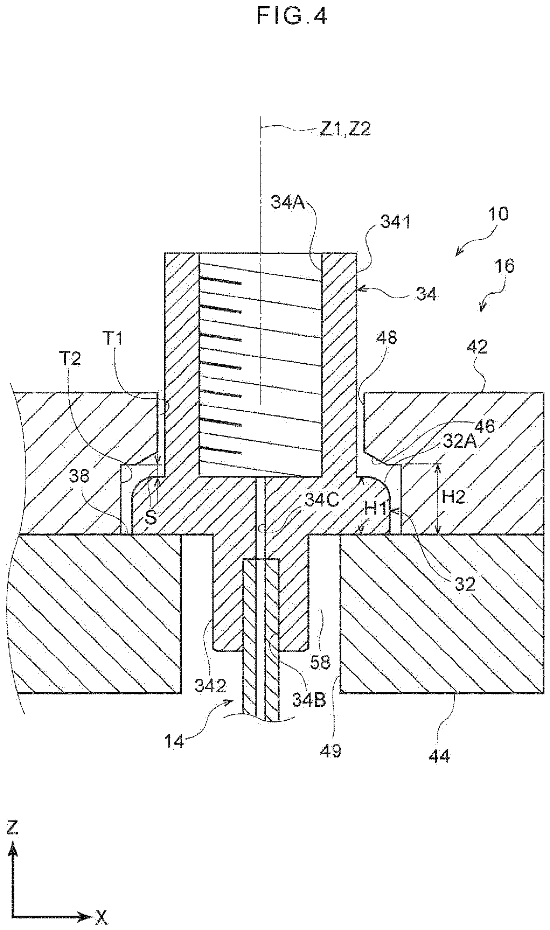

As illustrated in Figs. 1 and 2, the joint portion 34 that couples the nozzle main body 141 and a tube (not illustrated) for transferring a specimen, a reagent liquid, and the like is provided on the upper side of the nozzle 14. In other words, the joint portion 34 is provided at an end portion opposite from the tip of the nozzle main body 141 for puncturing the specimen container 24. The joint portion 34 has a tube joining portion 341 for coupling a tube, a nozzle joining portion 342 for coupling the nozzle main body 141, and a projecting portion 32 formed between the tube joining portion 341 and the nozzle joining portion 342. The tube joining portion 341, the projecting portion 32, and the nozzle joining portion 342 are all formed in a hollow cylindrical shape concentrically about the central axis Z1. As illustrated in Fig. 4, the nozzle joining portion 342 and the nozzle main body 141 are formed as split bodies, and are coupled and fixed to each other. The nozzle joining portion 342 and the nozzle main body 141 may be integrally formed.

The tube j oining portion 341 is a hollow component inside of which a screw hole 34A is formed. A nozzle attachment hole 34B into which the nozzle main body 141 is fitted is formed in the nozzle joining portion 342. The screw hole 34A and the nozzle attachment hole 34B communicate with the nozzle main body 141 through a communication hole 34C. That is, the communication hole 34C can also be said to be a part of the nozzle through-passage in a state in which the nozzle main body 141 is attached to the nozzle attachment hole 34B. A tube joint portion 36 (Fig. 1) can be screwed into the screw hole 34A. The tube joint portion 36 is a member for coupling a tube (not illustrated) for transferring the specimen or the reagent liquid to the nozzle 14.

The projecting portion 32 is formed so as to project outward in the radial direction of the nozzle 14 from the tube joining portion 341 and the nozzle joining portion 342 at both ends of the joint portion 34. Here, an outer diameter of the projecting portion 32 is larger than an outer diameter of the tube joining portion 341 and an outer diameter of the nozzle joining portion 342.

The projecting portion 32 is formed with a pressed portion 32A that is chamfered (R-chamfered, i.e. chamfered with a radius of curvature R) so as to have an arc-shaped cross section at an upper shoulder portion (a portion serving as a boundary between the upper surface and the side surface). The pressed portion 32Ais, for example, an arc-shaped cross section surface, and may have a shape forming a part of a spherical surface. A center of the pressed portion 32A overlaps the central axis Z1 of the nozzle 14. That is, in plan view, the pressed portion 32A is formed in an annular shape having the same axial center as the nozzle 14. The pressed portion 32Amay have a tapered surface with a linearly inclined cross section by changing the arc shape of the cross section.

(Holder 16)

The holder 16 is a component that supports the nozzle 14, and the nozzle 14 is attached to an attachment portion 161 that is a predetermined position of the holder 16. The holder 16 can move relative to the specimen together with the nozzle 14. In each embodiment, a portion of the holder 16 having a function of supporting the nozzle 14 is collectively referred to as a support portion 38. In another embodiment to be described later, components having the function of supporting the nozzle 14 may be different, but the position at which the nozzle 14 is attached to the holder 16 does not change.

In the present embodiment, the holder 16 has an opening K that opens in the radial direction from a side surface thereof. The opening K is formed so as to penetrate vertically. The opening K allows the nozzle 14 to be attached to and detached from the holder 16 in the radial direction of the nozzle 14 from the side surface of the holder 16. The opening K that opens laterally in the holder 16 is also referred to as an inlet and outlet of the nozzle 14. Details of a method of attaching and detaching the nozzle 14 will be described later.

Next, the configuration of the holder 16 in the present embodiment will be specifically described. As illustrated in Fig. 2, the holder 16 has a lower body 44 and an upper body 42 fixed to overlap the lower body 44.

As illustrated in Figs. 2 and 4, the upper body 42 of the holder 16 is formed with a slit portion 48 penetrating vertically and opening laterally. In the lower body 44 of the holder 16, a slit portion 49 penetrating vertically and opening laterally is formed. The slit portion 48 extends from the inlet and outlet to the attachment portion 161 of the nozzle. In other words, in a state in which the upper body 42 and the lower body 44 overlap each other, the slit portion 48 and the slit portion 49 constitute the opening K. In other words, the slit portion 48 has a first guide groove portion T1 formed in the upper body 42 and a second guide groove portion T2 formed below the first guide groove portion T1. The second guide groove portion T2 has a larger width in the X direction than the first guide groove portion T1 and the slit portion 49. When the nozzle 14 is taken in and out, the first guide groove portion T1 and the second guide groove portion T2, that is, the slit portion 48, are both axisymmetric with respect to a center line C when viewed from the center line C in the Y direction through which the nozzle 14 passes. The width of the slit portion 49 below the second guide groove portion T2 is smaller than a diameter of the projecting portion 32.

A gap 58 is provided between the nozzle 14 and each side wall of the opening K in the X direction. The gap 58 secures a traveling space of the nozzle 14 so that the nozzle 14 described later can be easily taken in and out along the center line C, and also contributes to posture adjustment of the nozzle 14 described later.

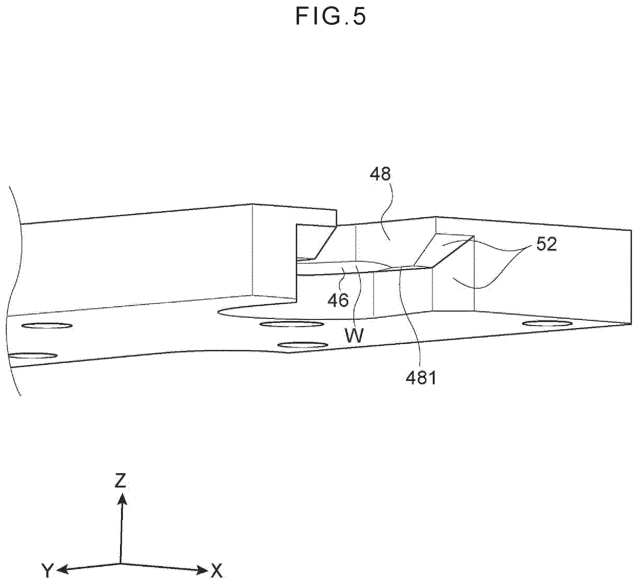

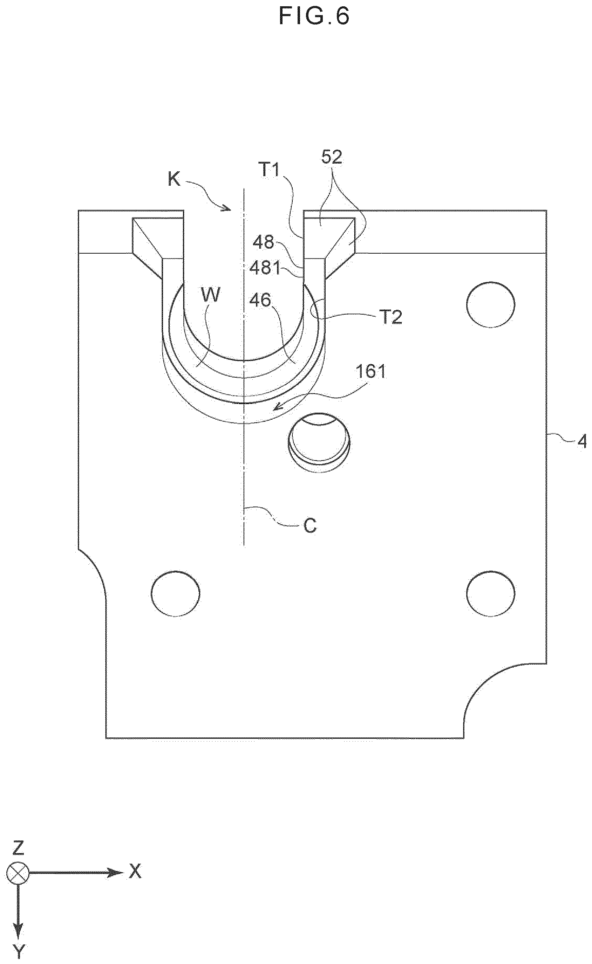

As illustrated in Figs. 5 and 6, the upper body 42 of the holder 16 has a boundary line 481 between the first guide groove portion T1 and the second guide groove portion T2. A part is scraped along the boundary line 481 to form an adjustment portion 46.

The adjustment portion 46 has a central axis Z2 overlapping the central axis Z1 of the nozzle 14 when viewed from the Z direction, and is an inclined surface formed around the central axis Z2 such that the inner side in the radial direction is higher than the outer side in the radial direction in a state in which the nozzle 14 to be described later is attached. The adjustment portion 46 is formed axially symmetric with respect to the center line C.

The adjustment portion 46 is formed so as to surround the periphery of the projecting portion 32 of the nozzle 14 along the boundary line 481 between the first guide groove portion T1 and the second guide groove portion T2, but does not extend to the opening K as illustrated in Figs. 2 and 6. In other words, the adjustment portion 46 is a portion having a conical inner surface that slightly wraps around (the lower edge of the adjustment portion 46 is C-shaped) from the attachment portion 161, that is a back (rear) side in the Y direction, to a boundary end portion of both ends of the inlet and outlet and an inclined surface of which a width decreases toward the boundary end portion. On the opening K side, since an amount of cutting a boundary line portion decreases, the boundary end portion protrudes from the adjustment portion 46 to the center of the slit portion 48 in the X direction. The both ends of the inlet and outlet of the slit portion 48 are connected to the boundary line 481, and the boundary line 481 is also referred to as a boundary end portion. In other words, it can be said that the adjustment portion 46 has a crossover portion W as a portion protruding to the center in the X direction from the adjustment portion 46 of the conical inner surface in the boundary end portion. The central axis Z2 is a central axis of the conical inner surface.

In the slit portion 48, guide portions 52 which facilitate insertion of the joint portion 34 (see Figs. 5 and 6) of the nozzle 14, for example, are formed so as to widen the opening of the slit portion 48 upward and in the width direction are provided at both end portions of the inlet and outlet of the nozzle 14. A shape of the guide portion 52 may be formed in any manner, and an inclined surface or an arc-shaped surface is considered as an example.

Here, as illustrated in Figs. 1 and 2, the attachment portion 161 is a hole that is on the back (rear) side of the opening K in the Y direction and penetrates the holder 16 in the Z direction. The central axis of the attachment portion 161 has a through-hole is in the Z direction. The central axis Z2 of the adjustment portion 46 overlaps the central axis of the attachment portion 161. The nozzle 14 having the joint portion 34 and the nozzle main body 141 in the Z direction is slidable from the inlet and outlet along the Y direction so as to be taken in and out. In other words, the taking in and out direction of the nozzle 14 is also a direction in which the center line C of the opening K in the X direction extends. In other words, the Y direction is also a direction in which the nozzle 14 is taken in and out. As a result, the holder 16 suspends and holds the nozzle 14 via the projecting portion 32 as described later.

As illustrated in Fig. 4, in a case in which the projecting portion 32 is placed on the lower body 44, the projecting portion 32 is positioned within a range of a height of the second guide groove portion T2 of the upper body 42. In other words, a height H1 of the projecting portion 32 is lower than a height H2 of the second guide groove portion T2, and a gap S between an upper surface of the projecting portion 32 and the second guide groove portion T2 is secured. In other words, in a state in which the nozzle 14 is supported by the holder 16, the adjustment portion 46 faces the pressed portion 32A with a space therebetween obliquely above the pressed portion 32A. In other words, the adjustment portion 46 is on an upper oblique side of the pressed portion 32A and faces the pressed portion 32A with the gap S that is a predetermined distance.

A basic structure of the nozzle structure 10 included in the specimen suction device has been described as described above. Next, an operation of each configuration will be described.

(Operation and Effect)

In the nozzle structure 10 according to the present embodiment, as illustrated in Figs. 1 and 2, the nozzle 14 is attached by being pressed against the holder 16 through the opening K such that the tube joining portion 341 is along the first guide groove portion T1 of the slit portion 48, the projecting portion 32 is along the second guide groove portion T2 of the slit portion 48, and the nozzle joining portion 342 is along the slit portion 49.

More specifically, the width of the slit portion 49 below the second guide groove portion T2 is smaller than the diameter of the projecting portion 32. That is, when the projecting portion 32 enters the second guide groove portion T2 and is pressed to the attachment portion 161 in the holder 16 along the second guide groove portion T2, a portion (protruding portion) protruding inward from the side surface of the second guide groove portion T2 in the lower body 44 supports the projecting portion 32, and the projecting portion 32 is hooked on the lower body 44 (see Fig. 4). As a result, the nozzle 14 slides on the upper surface of the lower body 44 while keeping a distance from the inner side surface of the opening K, and comes into contact with the upper surface of the lower body 44 with its full weight. In this state, the lower body 44 supports the nozzle 14. By inserting the nozzle 14 into the attachment portion 161 of the holder 16 in this manner, the attachment of the nozzle 14 to the analysis device is completed.

Here, the tip of the nozzle structure 10 is lowered toward the specimen container 24 in the Z direction as the analysis device is driven. During the lowering, the nozzle 14 comes into contact with the lid 22 of the specimen container 24, and the nozzle 14 receives a resistance reaction force from the lid 22 of the specimen container 24 in a state of attempting to puncture. The contact between the nozzle 14 and the lid 22 corresponds to a fulcrum of the nozzle 14. As described above, since the resistance reaction force from the fulcrum acts on the nozzle 14 upward in the Z direction, the projecting portion 32 of the nozzle 14 is separated from the upper surface of the lower body 44, and the pressed portion 32A relatively moves toward the adjustment portion 46. As a result, the pressed portion 32A moves upward with respect to the holder 16 and hits the adjustment portion 46, that is, an inclined surface formed around the central axis Z2 and inclined upward toward the inner side in the radial direction.

Here, since the pressed portion 32A and the adjustment portion 46 are formed symmetrically with respect to the central axis Z1 and the central axis Z2, the resistance reaction force received by the pressed portion 32A from the adjustment portion 46 is equally easily received from any horizontal direction. In other words, since the resistance reaction forces received by the pressed portion 32A from the adjustment portion 46 are balanced, the nozzle 14 tends to be in a posture extending in the vertical direction. Then, the nozzle 14 performs suction and discharge with respect to the specimen container 24 in a state of maintaining a posture extending in the vertical direction.

Here, the direction of the resistance reaction force from the tip of the nozzle 14 is not always in the vertical direction, but the resistance reaction force acts in a manner shifted from the vertical direction, and may be biased in any horizontal direction. In this case, the nozzle 14 is shifted from the vertical direction, and the nozzle 14 is inclined. In other words, the nozzle 14 is inclined with the lid 22 in contact with the nozzle 14 as a fulcrum. In a case in which the specimen is sucked or discharged in a state in which the nozzle 14 is inclined, an accuracy of an inspection cannot be secured, and thus, it is necessary to return the nozzle 14 from the inclined posture to the posture extending in the vertical direction.

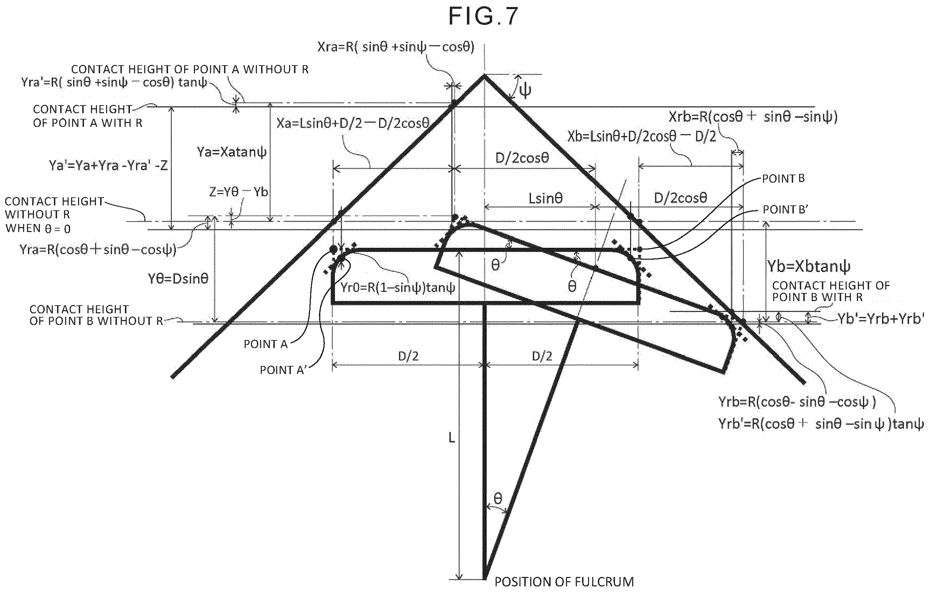

Here, in the present embodiment, as illustrated in Fig. 4, in the radial direction of the nozzle 14, the gap 58 between the nozzle 14 and the inner side surface of the opening K allows a certain degree of inclination of the nozzle 14 and limits a maximum inclination amount of the nozzle 14. That is, as illustrated in the schematic diagram of Fig. 7, while the nozzle 14 is inclined, a point B which is one side of the pressed portion 32A abuts the adjustment portion 46 from the inclination direction. Then, the adjustment portion 46 guides the nozzle 14 to return to the central axis Z2 side of the adjustment portion 46 by the resistance reaction force when the pressed portion 32A abuts. The nozzle 14 returns to the central axis Z2 side by the guide of the adjustment portion 46, and returns to a vertical posture as a whole. As a result, an accuracy of a horizontal position of the nozzle 14 is enhanced, and coaxiality with respect to the center of the lid 22 is secured. As described above, according to the present embodiment, the nozzle 14 can be easily attached by being simply pushed into the holder 16, and the vertical posture of the nozzle 14 can be stably maintained when the specimen analysis device is driven.

Conditions under which the posture of the nozzle can be adjusted are organized based on Figs. 7 to 9. As described above, when the condition of the posture of the nozzle under which the central axis Z1 of the nozzle 14 inclined can be returned in the vertical direction by the adjustment portion 46 is defined as an adjustable condition, the adjustable condition is the following Formula (1) from Figs. 7 to 9.

$$Ya' > Yb'$$

$$Ya + Yra - Yra' - Y\theta + Yb > Yrb + Yrb'$$

$$Ya + Yb + Yra - Yrb - Yra' - Yrb' - Y\theta > 0$$

$$(Xa + Xb)\tan\psi + R(\cos\theta + \sin\theta - \cos\psi) - R(\cos\theta - \sin\theta - \cos\psi) - R(\sin\theta + \sin\psi - \cos\theta)\tan\psi - R(\cos\theta + \sin\theta - \sin\psi)\tan\psi - D\sin\theta > 0$$

$$(2L\sin\theta)\tan\psi + 2R\sin\theta - R(2\sin\theta)\tan\psi - D\sin\theta > 0$$

$$(2L - 2R)\sin\theta\cdot\tan\psi + (2R - D)\sin\theta > 0$$

$$(2L - 2R)\sin\theta\cdot\tan\psi > (D - 2R)\sin\theta$$

$$2(L - R)\tan\psi > (D - 2R) \cdots(1)$$

wherein:

L is a height from a position of a nozzle tip (fulcrum) to an upper end of the pressed portion 32A,
D is a diameter of the projecting portion (radial outer end of the pressed portion 32A) of the joint portion 34 in the nozzle 14,
R is a radius of curvature of R-chamfered portion of the pressed portion 32A,
$\psi$ is an angle formed by the horizontal direction and the adjustment portion 46, and
$\theta$ is an inclination angle of the nozzle 14.

In a case in which the condition indicated by the Formula (1) is satisfied, the adjustment portion 46 returns the nozzle 14 to the center line C, that is, the Z direction by the resistance reaction force when the pressed portion 32A abuts. In other words, in the present embodiment, it is possible to suppress a posture change (vertical alignment change) of the nozzle 14 when the nozzle main body 141 sucks or discharges the specimen from the specimen container 24. As a result, the accuracy of the horizontal position of the nozzle 14 is enhanced, and coaxiality with respect to the center of the lid 22 can be secured. As described above, according to the present embodiment, when the nozzle 14 is attached to the specimen analysis device, the accuracy of the horizontal position can be secured, and the posture of the nozzle 14 during operation is stabilized, so that the tip of the nozzle 14 can accurately puncture the lid 22.

[Second Embodiment]

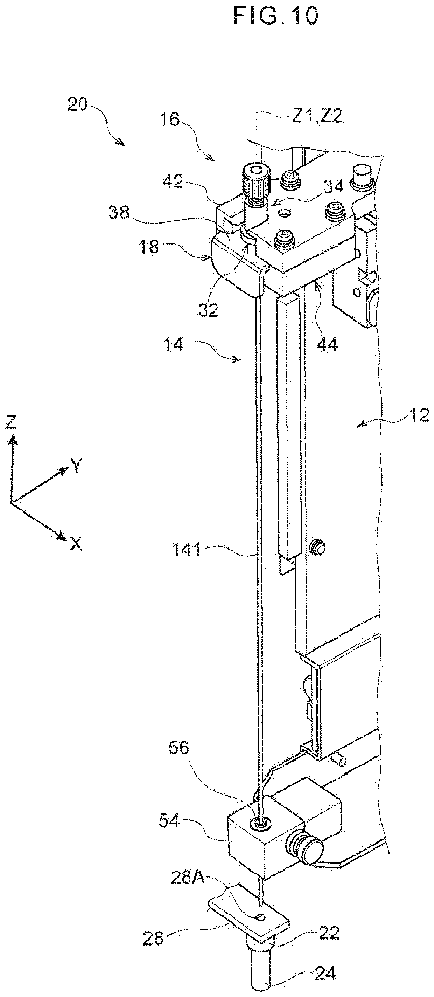

A second embodiment will be described with reference to Figs. 10 to 13. The same structures as those of the first embodiment are denoted by the same reference numerals, and detailed description thereof will be omitted.

(Configuration)

A nozzle structure 20 according to the second embodiment includes an insertion element 18 separate from the upper body 42 and the lower body 44. In the present embodiment, a nozzle main body guide portion 54 is further provided below the holder 16.

(Nozzle Main Body Guide Portion 54)

The nozzle main body guide portion 54 is provided with an O-ring 56 through which the nozzle main body 141 passes. By installing the nozzle main body guide portion 54 and the O-ring 56, it is possible to accurately guide the tip of the nozzle 14 to the specimen container 24, to extract the nozzle from the specimen container 24, and to clean the tip.
The nozzle main body guide portion 54 and the O-ring 56 are fixed to the nozzle support mechanism 12. The O-ring 56 is made of a flexible material. When the nozzle main body 141 vertically moves in a state of penetrating the O-ring 56, the nozzle main body 141 can move relative to the O-ring 56. However, a static frictional force generated between the nozzle main body 141 and the O-ring 56 is larger than the gravity acting on the nozzle 14, and the nozzle 14 can be supported.

(Holder 16)

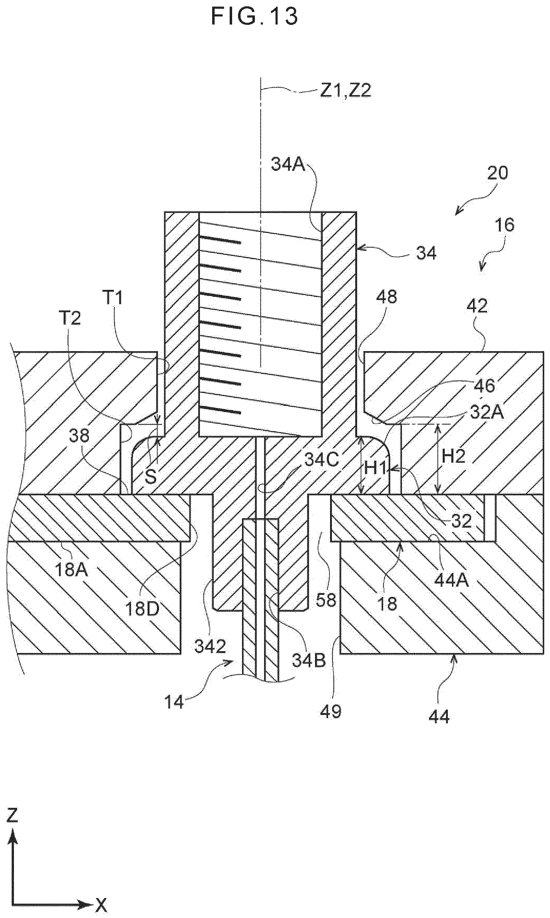

As illustrated in Fig. 13, in the present embodiment, an insertion guide groove portion 44A of which an upper surface is recessed downward is formed on the upper surface of the lower body 44 of the holder 16. In other words, in a state in which the upper body 42 and the lower body 44 are overlapped and fixed, a gap is formed between the lower surface of the upper body 42 and the upper surface of the lower body 44. The insertion guide groove portion 44A extends in the Y direction from the opening K and extends to the attachment portion 161.

(Insertion Element 18)

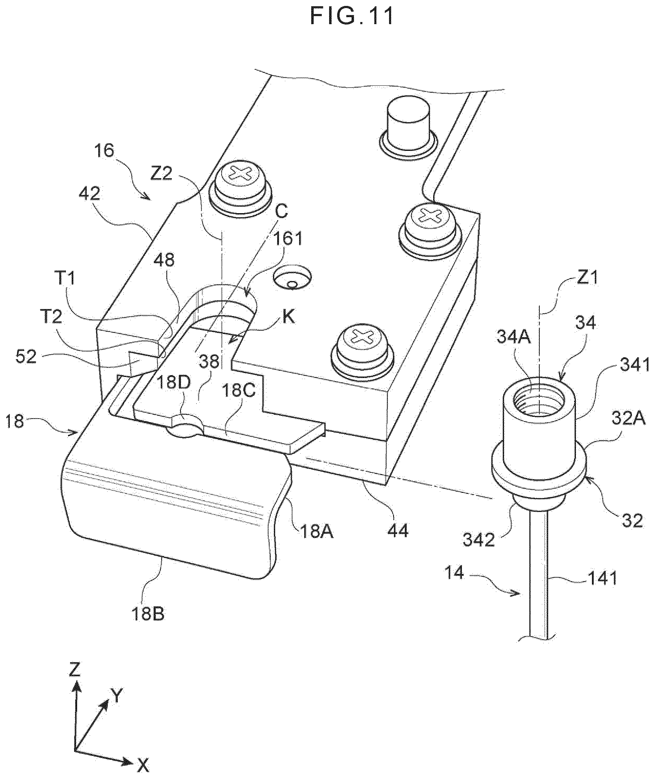

As illustrated in Figs. 10, 11, and 13, the insertion element 18 is, for example, a platelike member that is taken in and out of the holder 16 in a state in which the nozzle 14 is attached as described later. The insertion element 18 according to this embodiment has, for example, a horizontal portion 18A and a downward bent portion 18B. The horizontal portion 18A is formed with a slit 18C that opens in a direction (X direction in Fig. 11) different from the insertion direction (Y direction in Fig. 11) of the insertion element 18. A width of the slit 18C in the Y direction is set to be slightly larger than an outer diameter of the nozzle main body 141 and smaller than the projecting portion 32. The extending direction of the slit 18C may be parallel to the insertion direction of the nozzle 14, but it is preferable to extend in a direction different from the insertion direction of the nozzle 14 in order to prevent the nozzle 14 from unexpectedly escaping. In the present embodiment, the slit 18C extends in the X direction. The bent portion 18B is a grip portion when an operator operates the insertion element 18. Another grip portion may be provided instead of the bent portion 18B.

In a part of the slit 18C, for example, a nozzle attachment hole 18D having an inner diameter larger than the outer diameter of the nozzle main body 141 (specifically, the outer diameter of the nozzle joining portion 342) and smaller than the outer diameter of the projecting portion 32 is formed on the center line C.

Here, in the second embodiment, the nozzle 14 is attached to a predetermined nozzle attachment hole 18D of the insertion element 18 through the slit 18C. In other words, on the upper surface of the insertion element 18, the periphery of the nozzle attachment hole 18D serves as the support portion 38 for the nozzle 14. The nozzle attachment hole 18D is a circular through-hole having a diameter smaller than that of the projecting portion 32, and surrounds the periphery of the nozzle joining portion 342.

In the present embodiment, as illustrated in Figs. 10, 12, and 13, the projecting portion 32 of the nozzle 14 is supported by the insertion element 18, and the insertion element 18 is supported by the insertion guide groove portion 44A of the lower body 44. In the present embodiment, the insertion element 18 corresponds to the support portion 38 that supports the nozzle 14.

(Operation and Effect)

When the nozzle 14 is attached, first, the nozzle 14 is attached to the insertion element 18 in a state in which the lower tip of the nozzle main body 141 penetrates the O-ring 56 of the nozzle main body guide portion 54. Next, the insertion element 18 is inserted into the insertion guide groove portion 44A of the holder 16 while gripping the bent portion 18B of the insertion element 18. As a result, the nozzle 14 is attached to the nozzle support mechanism 12. In other words, the insertion element 18 is hooked on the insertion guide groove portion 44A, while the nozzle 14 is hooked on the nozzle attachment hole 18D of the insertion element 18. In a state in which the nozzle 14 is attached, it is preferable that the centers of the attachment portion 161 of the holder 16, the nozzle attachment hole 18D of the insertion element 18, and the O-ring 56 of the nozzle main body guide portion 54 coincide with each other in the Z direction. In other words, it is preferable that the central axis Z2 and the central axis of the O-ring coincide with each other. Even when the nozzle 14 is attached in a state in which the central axis Z1 and the central axis Z2 do not coincide with each other without considering whether the nozzle 14 is accurately matched with the attachment position and the posture at the time of attachment, the centers can coincide with each other during the movement of the nozzle 14 as described later. Also in this case, wear of the O-ring 56 can be reduced.

For example, as illustrated in Fig. 10, the nozzle structure 20 moves directly above the specimen container 24 in synchronization with the nozzle main body guide portion 54, lowers the nozzle main body 141 toward the specimen container 24, and causes the nozzle 14 to puncture the lid 22 of the specimen container 24. In this state, an upward frictional force is generated by the O-ring 56 with respect to the nozzle main body 141. As described above, since the static frictional force generated between the O-ring 56 and the nozzle 14 is larger than the gravity acting on the nozzle 14, the O-ring 56 lifts the nozzle 14 from the upper surface of the insertion element 18. Then, the O-ring 56 supports the nozzle 14, the projecting portion 32 is separated from the upper surface of the insertion element 18, and the pressed portion 32A approaches the adjustment portion 46 as in the first embodiment.

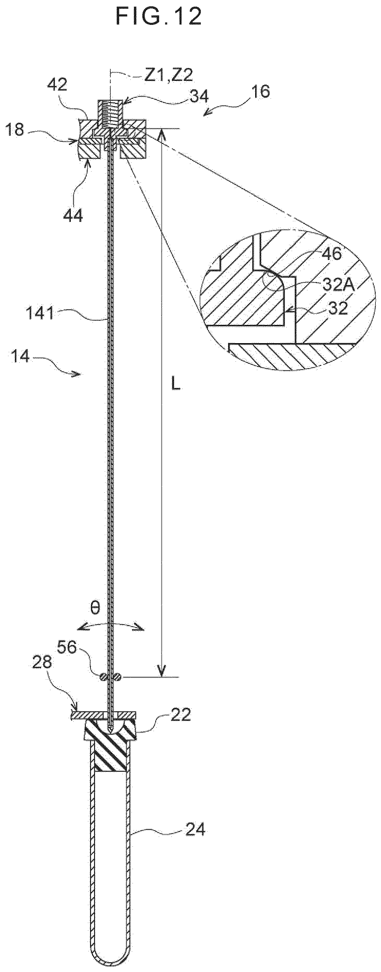

Fig. 12 illustrates a state in which the pressed portion 32A and the adjustment portion 46 are brought into contact with each other by the frictional force that the nozzle main body 141 receives from the O-ring 56. In Fig. 12, only the O-ring 56 is illustrated through the nozzle main body guide portion 54. As illustrated in Fig. 12, in a state in which the pressed portion 32A of the nozzle 14 abuts the adjustment portion 46, the nozzle 14 is separated from the support portion 38 and is supported by the O-ring 56. In other words, the nozzle 14 can incline with the O-ring 56 as a fulcrum. Similarly to the first embodiment, the central axis Z1 of the nozzle 14 can be made coincide with the central axis Z2 of the attachment portion 161 by an interaction between the adjustment portion 46 and the pressed portion 32A.

In the present embodiment, a length of L in Formula (1) corresponds to a height from the position in which the nozzle 14 and the O-ring 56 are in contact with each other to the upper end of the pressed portion 32A.

In the present embodiment, the nozzle 14 can be easily attached to the holder 16 by the above structure. Also in the present embodiment, during operation of the specimen analysis device, the nozzle 14 can be returned to the vertical posture by the frictional force received from the O-ring 56, and the nozzle 14 can be maintained in the vertical posture by the resistance reaction force from the lid 22.

[Third Embodiment]

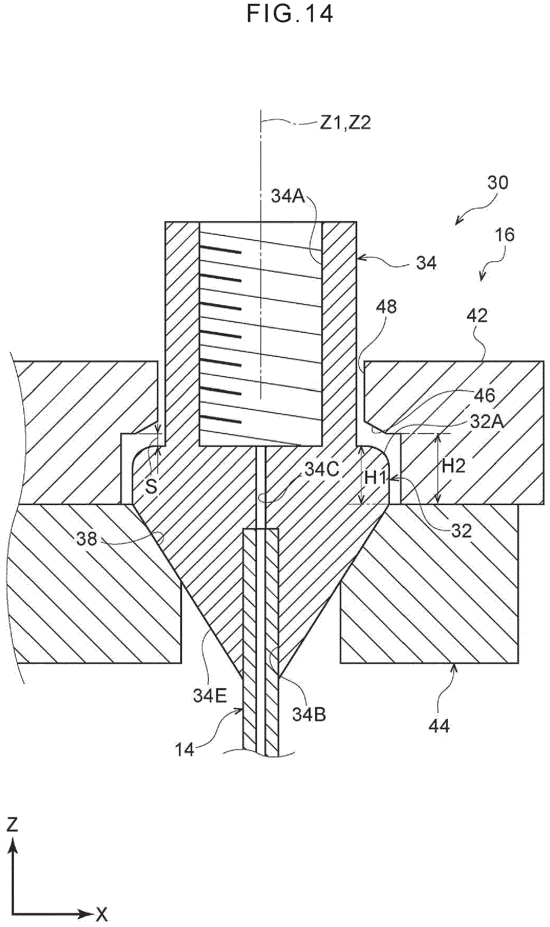

In Fig. 14, in a nozzle structure 30 according to the present embodiment, the support portion 38 of the holder 16 is a conical inner surface provided in the lower body 44 in the first embodiment. A lower outer peripheral surface of the joint portion 34 of the nozzle 14 is a conical outer surface 34E that fits the support portion 38 which is a conical inner surface. In the present embodiment, since the nozzle 14 and the holder 16 abut on each other on the conical surfaces, the nozzle 14 is easily pushed.

The other parts are the same as those of the first embodiment or the second embodiment, and thus the description thereof will be omitted.

[Fourth Embodiment]

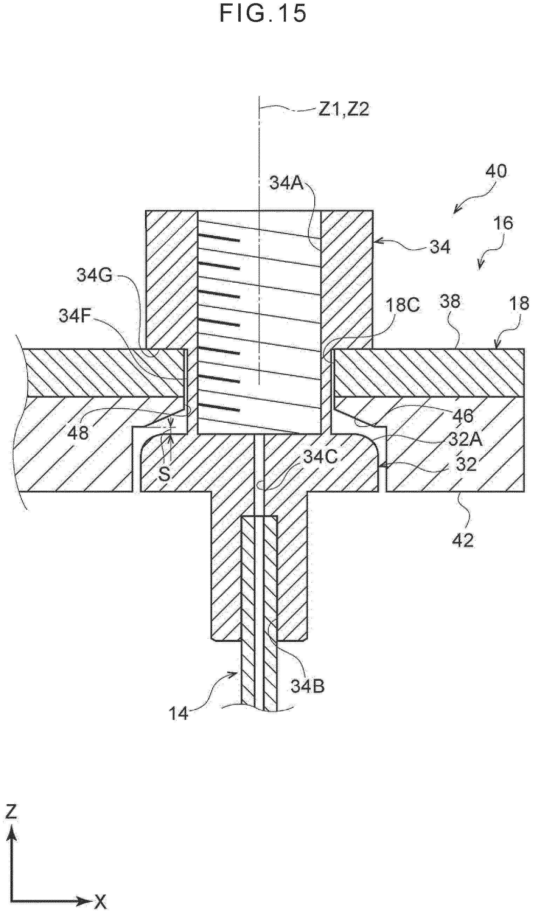

In Fig. 15, in a nozzle structure 40 according to the present embodiment, the lower body 44 in the first embodiment is omitted, and the insertion element 18 is attached onto the upper body 42 of the holder 16. The joint portion 34 of the nozzle 14 is provided with a small diameter portion 34F slightly longer in the vertical direction than the thickness of the insertion element 18. An end surface 34G positioned on the upper side of the small diameter portion 34F in the joint portion 34 abuts the upper surface of the insertion element 18 to support the nozzle 14. That is, the upper surface of insertion element 18 corresponds to support portion 38. In the present embodiment, since the number of components is reduced as compared with the first embodiment, the cost can be reduced.

[Fifth Embodiment]

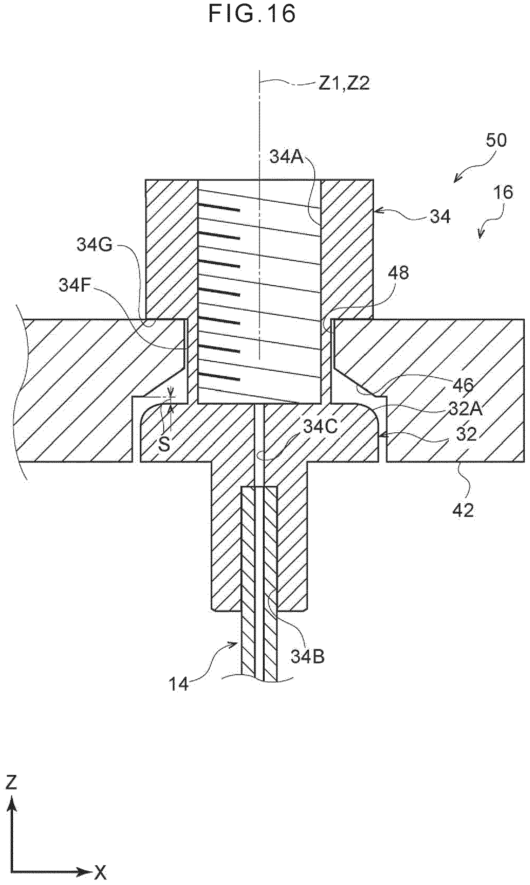

In Fig. 16, in a nozzle structure 50 according to the present embodiment, the insertion element 18 in the fourth embodiment is omitted, and the nozzle 14 is configured to be directly supported by the upper body 42 of the holder 16. Specifically, the nozzle 14 is supported by the end surface 34G of the joint portion 34 positioned on the upper side of the small diameter portion 34F being directly hooked on the upper surface of the upper body 42. That is, the upper surface of the upper body 42 corresponds to the support portion 38. In the present embodiment, since the number of components is reduced as compared with the fourth embodiment, the cost can be reduced.

The other parts are the same as those of the first embodiment, and thus the description thereof will be omitted.

[Other Embodiments]

In the above description, the adjustment portion 46 and the pressed portion 32A are configured symmetrically with respect to the central axis Z1 and the central axis Z2, respectively, the adjustment portion 46 is a conical inner surface, and the pressed portion 32A is an arc-shaped cross section surface or a tapered surface that faces the conical inner surface. However, the adjustment portion 46 and the pressed portion 32A are not limited to such shapes. The adjustment portion 46 only needs to be able to adjust the posture of the nozzle 14 by the resistance reaction force when the pressed portion 32A abuts.

**Claims**

1. A nozzle structure (10; 20; 30; 40; 50) comprising:

   a nozzle (14) that includes a pressed portion (32A); and
   a holder (16) that includes an adjustment portion (46) and that is configured to support the nozzle, wherein:

the pressed portion (32A) is formed in an annular shape having an axis (Z1) that is identical to an axis (Z1) of the nozzle (14), and

the adjustment portion (46) faces the pressed portion (32A) with a space (S) therebetween obliquely above the pressed portion (32A), in a state in which the nozzle (14) is supported by the holder (16),

the adjustment portion (46) is configured to return the nozzle (14) to a central axis (Z2) of the adjustment portion (46) by a reaction force when the pressed portion (32A) abuts the adjustment portion (46), **characterised in that** a relationship of $2(L - R) \tan\psi > (D - 2R)$ is satisfied by the nozzle structure, wherein:

L is a height from a fulcrum provided below the holder (16) and supporting the nozzle (14) separately from the holder, to an upper end of the pressed portion (32A),

D is a diameter of a radial outer end of the pressed portion (32A) in the nozzle,

R is a radius of curvature of a cross-sectional shape of the pressed portion (32A), and

$\psi$ is an angle formed by a horizontal direction and the adjustment portion (46).

2. The nozzle structure (10; 20; 30; 40; 50) according to claim 1, wherein the holder (16) has an opening (K) that opens in a radial direction from a side surface thereof and penetrates vertically for taking in and out the nozzle (14) from a side.

3. The nozzle structure (20; 40) according to claim 1 or 2, further comprising:

an insertion element (18) that is configured to be taken in and out of the holder (16), wherein the nozzle (14) is configured to be taken in and out of the holder (16) while being attached to the insertion element (18).

4. The nozzle structure (20) according to claim 3, wherein a gap (58) that allows inclination of the nozzle (14) and that limits a maximum inclination amount of the nozzle (14) is provided between the nozzle (14) and the insertion element (18), in a radial direction of the nozzle (14).

5. The nozzle structure (20; 40) according to claim 3 or 4, wherein the insertion element (18) is formed with a slit (18C) that opens in a direction different from an insertion direction of the insertion element (18) with respect to the holder (16).

6. The nozzle structure (20; 40) according to claim 5, wherein a nozzle attachment hole (18D) is formed in a part of the slit (18C).

7. The nozzle structure (20; 40) according to any of claims 3 to 6, wherein the insertion element (18) is provided with a grip portion (18B) for operating the insertion element.

8. The nozzle structure (30) according to claim 1 or 2, wherein:

the nozzle (14) includes a nozzle main body (141) and a joint portion (34) provided at an end portion opposite from a tip of the nozzle main body,

a conical inner surface is formed at the holder (16), and

a lower outer peripheral surface of the joint portion (34) is a conical outer surface (34E) that fits the conical inner surface.

9. The nozzle structure according to any preceding claim, wherein:

the adjustment portion (46) and the pressed portion (32A) are respectively configured axially symmetrically,

the adjustment portion (46) is a conical inner surface, and

the pressed portion (32A) is an arc-shaped cross section surface or a tapered surface that faces the conical inner surface.

**Patentansprüche**

1. Düsenstruktur (10; 20; 30; 40; 50), umfassend:

eine Düse (14), die einen gepressten Abschnitt (32A) einschließt; und

einen Halter (16), der einen Einstellabschnitt (46) einschließt und der so konfiguriert ist, dass er die Düse trägt, wobei:

der gepresste Abschnitt (32A) ringförmig ausgebildet ist und eine Achse (Z1) aufweist, die mit einer Achse (Z1) der Düse (14) identisch ist, und

der Einstellabschnitt (46) dem gepressten Abschnitt (32A) mit einem Zwischenraum (S) dazwischen schräg über dem gepressten Abschnitt (32A) gegenüberliegt, in einem Zustand, in dem die Düse (14) von dem Halter (16) getragen wird,

der Einstellabschnitt (46) so konfiguriert ist, dass er die Düse (14) durch eine Reaktionskraft zu einer zentralen Achse (Z2) des Einstellabschnitts (46) zurückführt, wenn der gepresste Abschnitt (32A) an dem Einstellabschnitt (46) anliegt,

**dadurch gekennzeichnet, dass** die Beziehung 2(L - R) tan$\psi$ > (D - 2R) durch die Düsenstruktur erfüllt wird, wobei:

L die Höhe von einem Drehpunkt ist, der unterhalb des Halters (16) bereitgestellt ist und die Düse (14) getrennt vom Halter trägt, bis zu einem oberen Ende des gepressten Abschnitts (32A),

D der Durchmesser des radial äußeren Endes des gepressten Abschnitts (32A) in der Düse ist,

R ein Krümmungsradius einer Querschnittsform des gepressten Abschnitts (32A) ist, und

$\psi$ ein Winkel ist, der durch eine horizontale Richtung und den Einstellabschnitt (46) gebildet wird.

2. Düsenstruktur (10; 20; 30; 40; 50) nach Anspruch 1, wobei der Halter (16) eine Öffnung (K) aufweist, die sich in einer radialen Richtung von einer Seitenfläche desselben aus öffnet und vertikal eindringt, um die Düse (14) von einer Seite her ein- und auszuführen.

3. Düsenstruktur (20; 40) nach Anspruch 1 oder 2, weiter umfassend:
ein Einführelement (18), das so konfiguriert ist, dass es in den Halter (16) eingeführt und aus ihm herausgenommen werden kann, wobei die Düse (14) so konfiguriert ist, dass sie in den Halter (16) eingeführt und aus ihm herausgenommen werden kann, während sie an dem Einführelement (18) befestigt ist.

4. Düsenstruktur (20) nach Anspruch 3, wobei zwischen der Düse (14) und dem Einführelement (18) in radialer Richtung der Düse (14) ein Spalt (58) bereitgestellt ist, der eine Neigung der Düse (14) zulässt und der einen maximalen Neigungsbetrag der Düse (14) begrenzt.

5. Düsenstruktur (20; 40) nach Anspruch 3 oder 4, wobei das Einführelement (18) mit einem Schlitz (18C) ausgebildet ist, der sich in einer Richtung öffnet, die sich von einer Einführungsrichtung des Einführelements (18) in Bezug auf den Halter (16) unterscheidet.

6. Düsenstruktur (20; 40) nach Anspruch 5, wobei ein Düsenbefestigungsloch (18D) in einem Teil des Schlitzes (18C) ausgebildet ist.

7. Düsenstruktur (20; 40) nach einem der Ansprüche 3 bis 6, wobei das Einführelement (18) mit einem Griffabschnitt (18B) zur Betätigung des Einführelements vorgesehen ist.

8. Düsenstruktur (30) nach Anspruch 1 oder 2, wobei:

die Düse (14) einen Düsenhauptkörper (141) und einen Verbindungsabschnitt (34) einschließt, der an einem Endabschnitt gegenüber einer Spitze des Düsenhauptkörpers bereitgestellt ist,

am Halter (16) eine konische Innenfläche ausgebildet ist, und

eine untere äußere Umfangsfläche des Verbindungsabschnitts (34) eine konische Außenfläche (34E) ist, die zu der konischen Innenfläche passt.

9. Düsenstruktur nach einem der vorstehenden Ansprüche, wobei:

der Einstellabschnitt (46) und der gepresste Abschnitt (32A) jeweils axialsymmetrisch angeordnet sind,

der Einstellabschnitt (46) eine konische Innenfläche ist, und

der gepresste Abschnitt (32A) eine bogenförmige Querschnittsfläche oder eine verjüngte Fläche ist, die der konischen Innenfläche gegenüberliegt.

**Revendications**

1. Structure (10 ; 20 ; 30 ; 40 ; 50) de buse comprenant :

   une buse (14) qui inclut une partie (32A) pressée ; et
   un support (16) qui inclut une partie (46) de réglage et qui est configuré pour supporter la buse, dans laquelle :

   la partie (32A) pressée est formée en une forme annulaire ayant un axe (Z1) qui est identique à un axe (Z1) de la buse (14), et
   la partie (46) de réglage fait face à la partie (32A) pressée avec un espace (S) entre celles-ci obliquement au-dessus de la partie (32A) pressée, dans un état dans lequel la buse (14) est supportée par le support (16), la partie (46) de réglage est configurée pour ramener la buse (14) sur un axe central de la partie (46) de réglage par une force de réaction lorsque la partie (32A) pressée vient buter contre la partie (46) de réglage, **caractérisée en ce que** la relation $2(L - R) \tan\psi > (D - 2R)$ est satisfaite par la structure de buse, dans laquelle :

   L est une hauteur allant d'un point d'appui disposé sous le support (16) et supportant la buse (14) séparément du support, jusqu'à une extrémité supérieure de la partie (32A) pressée,
   D est un diamètre d'une extrémité extérieure radiale de la partie (32A) pressée dans la buse,
   R est un rayon de courbure d'une forme en coupe transversale de la partie (32A) pressée, et
   $\psi$ est un angle formé par une direction horizontale et la partie (46) de réglage.

2. Structure (10 ; 20 ; 30 ; 40 ; 50) de buse selon la revendication 1, dans laquelle le support (16) présente une ouverture (K) qui s'ouvre dans une direction radiale à partir d'une surface latérale de celui-ci et pénètre verticalement pour recevoir et retirer la buse (14) par un côté.

3. Structure (20 ; 40) de buse selon la revendication 1 ou la revendication 2, comprenant en outre :
   un élément (18) d'insertion qui est configuré pour être reçu dans le support (16), et être retiré de celui-ci, dans laquelle la buse (14) est configurée pour être reçue dans le support (16), et être retirée de celui-ci, tout en étant fixée à l'élément (18) d'insertion.

4. Structure (20) de buse selon la revendication 3, dans laquelle un espace (58) qui inclut une inclinaison de la buse (14) et qui limite une quantité maximale d'inclinaison de la buse (14) est prévu entre la buse (14) et l'élément (18) d'insertion, dans une direction radiale de la buse (14).

5. Structure (20 ; 40) de buse selon la revendication 3 ou la revendication 4, dans laquelle l'élément (18) d'insertion est muni d'une fente (18C) qui s'ouvre dans une direction différente d'une direction d'insertion de l'élément (18) d'insertion par rapport au support (16).

6. Structure (20 ; 40) de buse selon la revendication 5, dans laquelle un trou (18D) de fixation de buse est formé dans une partie de la fente (18C).

7. Structure (20 ; 40) de buse selon l'une quelconque des revendications 3 à 6, dans laquelle l'élément (18) d'insertion est doté d'une partie (18B) de préhension pour actionner l'élément d'insertion.

8. Structure (30) de buse selon la revendication 1 ou la revendication 2, dans laquelle : la buse (14) inclut un corps (141) principal de buse et une partie (34) d'articulation disposée au niveau d'une partie d'extrémité opposée à une pointe du corps principal de buse, une surface intérieure conique est formée au niveau du support (16), et une surface périphérique extérieure inférieure de la partie (34) d'articulation est une surface (34E) extérieure conique qui s'ajuste à la surface intérieure conique.

9. Structure de buse selon une quelconque revendication précédente, dans laquelle :
   la partie (46) de réglage et la partie (32A) pressée sont respectivement configurées selon une symétrie axiale,

   la partie (46) de réglage est une surface intérieure conique, et
   la partie (32A) pressée est une surface en coupe transversale en forme d'arc ou une surface effilée qui fait face à la surface intérieure conique.

# FIG.1

FIG.2

FIG.3

# FIG.4

FIG.5

# FIG.6

# FIG.7

POSITION OF FULCRUM

EP 4 321 251 B1

FIG.8

EP 4 321 251 B1

FIG.9

$Yrb = R\cos\theta - R\sin\theta - R\sin\psi$

$Xrb = R\cos\theta + R\sin\theta - R\sin\psi$

$R\cos\theta$

$R\sin\theta$

$R\cos\theta$

$R\cos\psi$

$R\sin\theta$

$R\sin\psi$

$\psi$

$\theta$

21

# FIG.10

# FIG.11

# FIG.12

# FIG.13

# FIG.14

# FIG.15

FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H915113 A
- EP 3418752 A1
- US 2007095159 A1
- US 2012321520 A1